# EUROPÄISCHE PATENTANMELDUNG

(11) **EP 0 546 329 A1**
(43) Veröffentlichungstag der Anmeldung: **16.06.1993**
(21) Anmeldenummer: 92119131.8
(22) Anmeldetag: 09.11.1992
(51) Int. Cl.: C03B 37/018

(54) **Verfahren und Vorrichtung zur Herstellung einer Vorform für Glasfaser-Lichtwellenleiter**

(30) Priorität: 11.12.1991 DE 4140765
(71) Anmelder: kabelmetal electro GmbH, D-30002 Hannover (DE)
(72) Erfinder: Keim, Norbert, Dipl.-Ing., W-7120 Bietigheim-Bissingen (DE); Günther, Robert, Dipl.-Ing., W-7807 Elzach (DE)

(57) **Zusammenfassung**

Zur Herstellung einer Vorform für Glasfaser-Lichtwellenleiter mit einem Kern und einem ein- oder mehrschichtigen Mantel werden Glasmaterialien unter Wärmeeinwirkung auf einem Träger (11) abgeschieden und/oder solche durch Ätzen wieder abgetragen. Während der Abscheidung und/oder des Ätzens führt mindestens der Träger (11) eine Drehbewegung um seine Achse aus. Wesentlich hierbei ist, daß während der Drehbewegung des Trägers (11) oder der Wärmequelle die Winkelgeschwindigkeit in Abhängigkeit vom jeweiligen Drehwinkel gesteuert wird.

## Beschreibung

Die vorliegende Erfindung befaßt sich mit einem Verfahren zur Herstellung einer Vorform für Glasfaser-Lichtwellenleiter mit einem Kern und einem ein- oder mehrschichtigen Mantel, bei dem Glasmaterialien unter Wärmeeinwirkung auf einem Träger abgeschieden und/oder solche durch Ätzen wieder abgetragen werden, wobei während der Abscheidung und/oder des Ätzens mindestens der Träger eine Drehbewegung um seine Achse ausführt.

Verfahren der gattungsgemäßen Art sind seit langem bekannt, dabei erfolgt das Abscheiden von Glasmaterialien aber auf unterschiedlichem Wege. So wird bei dem sogenannten Innenbeschichtungsverfahren, auch als MCVD-Verfahren bezeichnet, eine geeignete Wärmequelle innerhalb der Beschichtungs- bzw. Kollabieranlage ein oder mehrere Male in Längsrichtung am zu beschichtenden Glasrohr entlang geführt, wobei die Beschichtung mit der entsprechenden Temperaturbehandlung in der Regel nur jeweils in einer Richtung erfolgt. Zur Beschichtung selbst werden Metallhalogenide, beispielsweise reine oder dotierte Siliciumhalogenide, bei hohen Temperaturen in die entsprechenden Oxide umgesetzt, wobei die chemische Umsetzung und der Abscheidungsprozeß sowie die Verglasung des abgeschiedenen Materials praktisch gleichzeitig stattfinden. Bekannt ist aber auch ein Verfahren (DE-OS 33 18 107), bei dem auf einem Trägerkörper das Glasausgangsmaterial unter Verwendung einer Suspension aufgebracht wird, die aus pulverförmigem Glasausgangsmaterial und einer Bindemittellösung hergestellt wird. Eine andere, seit Jahren praktizierte Möglichkeit ist die, daß auf einem rotierenden Trägerkörper aus Glas oder Aluminiumoxid hochreines Quarzpulver abgeschieden wird, das bei der Verbrennung von Siliciumtetrachlorid, Sauerstoff, Erdgas und Germaniumtetrachlorid entsteht (OVD-Verfahren). Unabhängig davon, welchem der geschilderten Verfahren man aus technischen oder wirtschaftlichen Gründen den Vorzug gibt, ist in jedem Fall eine Temperaturbehandlung während des Herstellungsprozesses notwendig, die einmal die chemische Reaktion der Gase und den Niederschlag der Oxide bewirkt bzw. zu einem Aufschmelzen der niedergeschlagenen oder sonstwie aufgebrachten Glasteilchen führt.

Eine Temperaturbehandlung während des Fertigungsprozesses von Vorformen hat sich aber auch dann als zweckmäßig erwiesen, wenn ein zusätzlicher Ätzvorgang vor/während oder nach Abschluß des Beschichtungsverfahrens verlangt wird.

Nun gibt es aber Fälle, bei denen die bekannten Verfahren nicht ausreichen, die gewünschten Eigenschaften bei Glasfasern zu erzielen. Das gilt insbesondere für solche Fasern, die für Kurzstrekken verwendet werden oder solchen, die als Sensoren oder Polarisatoren Eingang in die entsprechende Technik gefunden haben. Kommt es z. B. darauf an, bei der Übertragung Randmoden von der Faser dadurch abzustreifen, daß ein elliptischer Faserquerschnitt gewählt wird, bringt diese Forderung bei dem bekannten Herstellungsverfahren doch erhebliche Schwierigkeiten mit sich. Bisher hat man versucht, hier einen Ausweg über entsprechende Änderungen der Brennerkonstruktionen zu erreichen, dies hat jedoch, abgesehen von dem erhöhten Fertigungsaufwand, bisher nicht immer den gewünschten Erfolg gebracht.

Ausgehend von diesem Stand der Technik liegt daher der Erfindung die Aufgabe zugrunde, bekannte Herstellungsverfahren zur Erzeugung einer Vorform für Glasfaser-Lichtwellenleiter so abzuwandeln, daß problemlos Glasfasern beliebiger Querschnittsformen herstellbar sind.

Gelöst wird diese Aufgabe gemäß der Erfindung dadurch, daß während der Drehbewegung des Trägers oder der Wärmequelle die Winkelgeschwindigkeit in Abhängigkeit vom jeweiligen Drehwinkel gesteuert wird. Die Erfindung beruht dabei auf der Erkenntnis, daß als Folge der von dem verwendeten Brenner oder Brennersystem erreichten Temperaturverteilung und der sich fortlaufend ändernden Verweildauer der Glasteilchen in der Befeuerungszone unterschiedliche Glasschichten bzw. im Falle des Ätzens unterschiedliche Ätztiefen einstellen. Diese Möglichkeit ist anwendbar auf die Verfahren der Innenbeschichtung ebenso wie auf die sogenannte Außenbeschichtung bzw. auf die entsprechenden Ätzverfahren innerhalb eines Trägerkörpers, beispielsweise eines Rohres, oder außerhalb.

Da für das erfindungsgemäße Verfahren einerseits die durch die Drehbewegung erreichte unterschiedliche Temperaturverteilung maßgeblich ist, andererseits aber die Erkenntnis vorliegt, daß es bei der Herstellung der Vorform auf beliebigem Wege und bei den unterschiedlichen Arbeitsschritten auf eine bestimmte Temperaturführung ankommt, läßt sich das Verfahren nach der Erfindung nicht nur dort anwenden, wo es auf unterschiedliche Schichtdicken zur Erzielung besonderer Faserquerschnitte ankommt, sondern auch dort, wo eine über dem Umfang gleichmäßig verteilte Temperaturbeanspruchung nicht möglich ist bzw. Ausgangsmaterialien verwendet werden müssen, beispielsweise Kernsubstrate oder Sleevingrohre, bei denen die Gleichmäßigkeit der geforderten Abmessungen nicht im gewünschten Toleranzbereich liegt. Mit der Erfindung lassen sich hierbei z. B. Schichtdicken ausgleichen, beim sogenannten Kollabier- bzw. Sleevingprozeß lassen sich mit der Steuerung der Temperaturverteilung nach der Erfindung diese Vorgänge aber auch vergleichmäßigen, wenn bei über dem Querschnitt unterschiedlichen Abmessungen diese Vorgänge unregelmäßig ablaufen, der Schrumpfprozeß also nicht gleichmäßig über den gesamten Umfang in radialer Richtung erfolgt.

Um die gewünschten Eigenschaften der aus einer Vorform gezogenen Glasfasern sicherzustellen, kommt es neben der Reinheit der verwendeten Ausgangsmaterialien vor allem auch darauf an, daß die einzelnen Fertigungsschritte in engen Toleranzbereichen durchgeführt werden. Dem trägt die Erfindung in einer weiteren Ausgestaltung dadurch Rechnung, daß die Steuerung längs vorgegebener Winkelbereiche zu unterschiedlichen Drehgeschwindigkeiten des Trägers oder der Wärmequelle während einer Umdrehung führt.

Mit der Erfindung lassen sich die unterschiedlichsten Faserquerschnitte herstellen, das gilt sowohl für das Kernprofil als auch für den den Kern umgebenden Mantel. So sind problemlos Faserprofile mit z. B. elliptischem Kern und umgekehrt Faserprofile mit rundem Kernquerschnitt aber z. B. elliptisch geformtem Mantel ebenso herstellbar wie z. B. solche mit rundem Kernquerschnitt und beidseitig schleifenförmigen Mantelprofilen. Um diese Möglichkeiten zu erreichen, hat es sich in Durchführung der Erfindung als zweckmäßig erwiesen, wenn die jeweilige Winkelposition des Trägers, beispielsweise eines Rohres, wenn es sich um die Innenbeschichtung handelt, oder eines Stabes, wenn es darum geht, die Glaspartikel auf die äußere Oberfläche aufzubringen, gemessen, hieraus die Drehzahlsollwert-Funktion n (a) ermittelt und zur Drehung des Trägers verwendet wird.

Zur Durchführung eines solchen Verfahrens dient in Weiterführung des Erfindungsgedankens eine Vorrichtung mit einer Dreheinheit für den Träger oder die Wärmequelle, wobei an der Dreheinheit ein Drehwinkelgeber drehbar angeordnet ist. Dieser Drehwinkelgeber ist an einen Rechner zur Ermittlung der Drehzahlsollwert-Funktion angeschlossen, wobei er den verwendeten Antrieb mit der für den jeweiligen Drehwinkelbereich vorgesehenen Solldrehzahl beaufschlagt. Um hier zu einer möglichst trägheitsfreien, d. h. kurzfristigen Steuerung des Antriebs zu kommen, ist der Antrieb für den Träger ein drehmassearmer Motor, der auf eine Spindelantriebswelle für den beiderseitigen Antrieb des Trägers einwirkt.

Zur Steuerung der Winkelgeschwindigkeit in Abhängigkeit vom jeweiligen Drehwinkel kann man nach einem weiteren Erfindungsgedanken auch so vorgehen, daß auf einer Spindel zur beiderseitigen Lagerung des Trägers eine dem gewünschten Faserquerschnitt der aus der Vorform gezogenen Faser entsprechende Scheibe angeordnet ist, deren von der Kreisform abweichende Querschnittsform über eine Abtastung des Umfanges eine Spannungsänderung an einem Steuerwiderstand hervorruft, die unmittelbar oder mittelbar den Antriebsmotor der Dreheinheit beeinflußt.

Für die Wärmebehandlung der Glasmaterialien während der Vorformherstellung werden üblicherweise Gasbrenner mit einer Anzahl Brennerköpfen verwendet. Dies können Köpfe aus Glas sein, aber auch solche aus Metall, die aus einem rechteckförmigen Formkörper bestehen und bei dem die Auslaßdüsen alle gemeinsam in einer rechteckförmigen Austrittsfläche enden. Diese Brennerköpfe können je nach dem gewünschten Temperatur-oder Flammenprofil in ihrer Stellung zur Vorform unterschiedlich angeordnet sein. In Durchführung der Erfindung hat es sich jedoch als zweckmäßig erwiesen, wenn die Brennerköpfe in Bezug auf die Trägerachse alle die gleiche Winkelposition einnehmen sowie in Reihe hintereinander angeordnet sind. Damit ergibt sich eine im Sinne der vorgeschlagenen Steuerung optimale Temperaturbeaufschlagung des jeweiligen Substrates.

Eine andere vorteilhafte Möglichkeit ist die, daß die Brennerköpfe in Bezug auf die Trägerachse in Reihen einander gegenüber angeordnet sind, wobei deren Winkelstellung bezogen auf die waagerechte Ebene unterschiedlich sein kann.

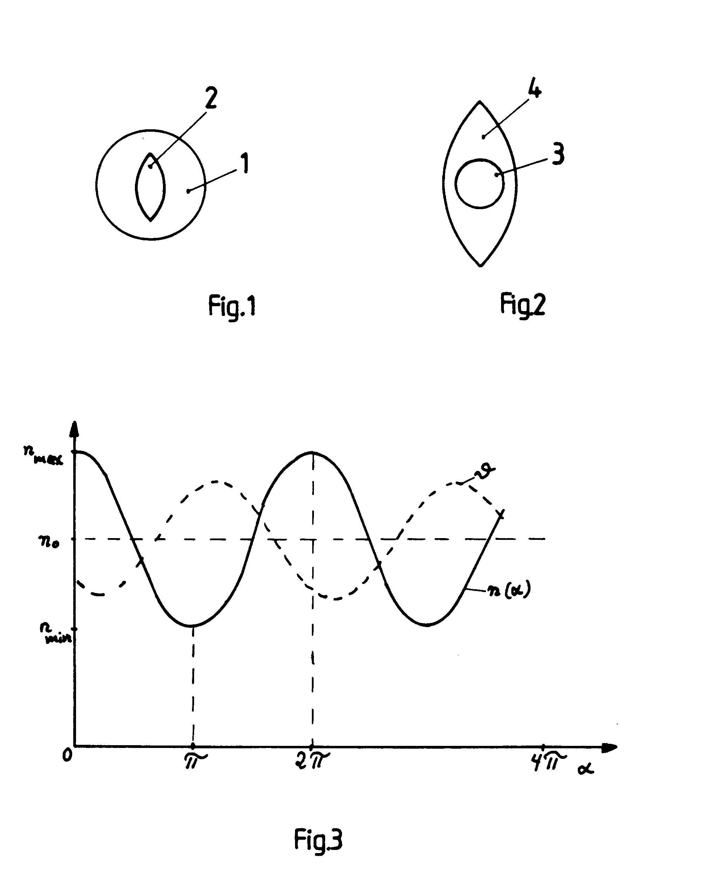

Die Erfindung sei anhand der in den Figuren 1 bis 7 dargestellten Ausführungsbeispiele näher erläutert.

In den Figuren 1 und 2 sind Faserprofile dargestellt, wie sie für besondere Anwendungszwecke gefordert werden. Dabei ist entsprechend der Figur 1 in einem zylindrischen Mantel 1 ein elliptischer Kern 2 angeordnet, während das Faserprofil nach der Figur 2 einen im Querschnitt kreisförmigen Kern mit anschließendem elliptischen Mantel zeigt.

In der Figur 3 ist in einem Diagramm über den Drehwinkel a die Spindel-Drehzahl aufgetragen. Bei einer möglichen Varianten der Drehzahlfunktion n (a) ergibt sich eine leichtphasenverschobene Temperaturverteilung in der Brennerkopfachse.

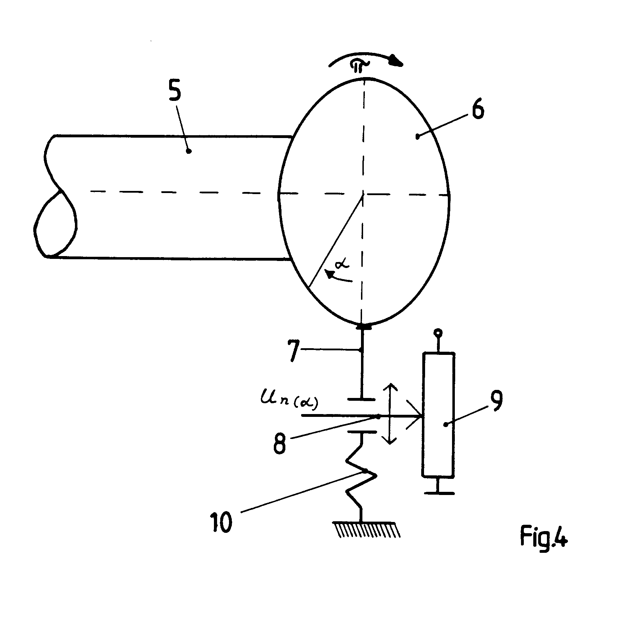

Eine besonders einfache Möglichkeit zur Durchführung des Verfahrens nach der Erfindung zeigt die Figur 4. Auf der die nicht dargestellte Vorform haltende Spindel 5 ist eine Scheibe 6 fest montiert, die mit der Spindel 5 während des Herstellungsprozesses umläuft. Die Querschnittsform dieser Scheibe ist so gewählt, daß sie der herzustellenden Fasergeometrie entspricht. Der sich während eines Umlaufes ständig ändernde Scheibendurchmesser wird mittels eines Abtaststiftes 7 abgetastet und entsprechend der abgetasteten Größe erfolgt eine Verstellung des Potentiometerabgriffes 8 an dem Widerstand 9. Der so ermittelte Spannungswert Uₙ in Abhängigkeit von der jeweiligen Winkelverstellung a kann dann entweder direkt oder über zusätzliche Regel- oder Kontrolleinrichtungen der Verstelleinrichtung des Antriebsmotors für die Spindel zugeführt werden. Eine Andrückfeder 10, schematisch dargestellt, sorgt für den notwendigen Anpreßdruck des Abtaststiftes 7 am Umfang der Scheibe 6. Diese Abtastung kann auch berührungslos z. B. mit optischen Sensoren, über Ultraschall, Laser oder induktiv erfolgen.

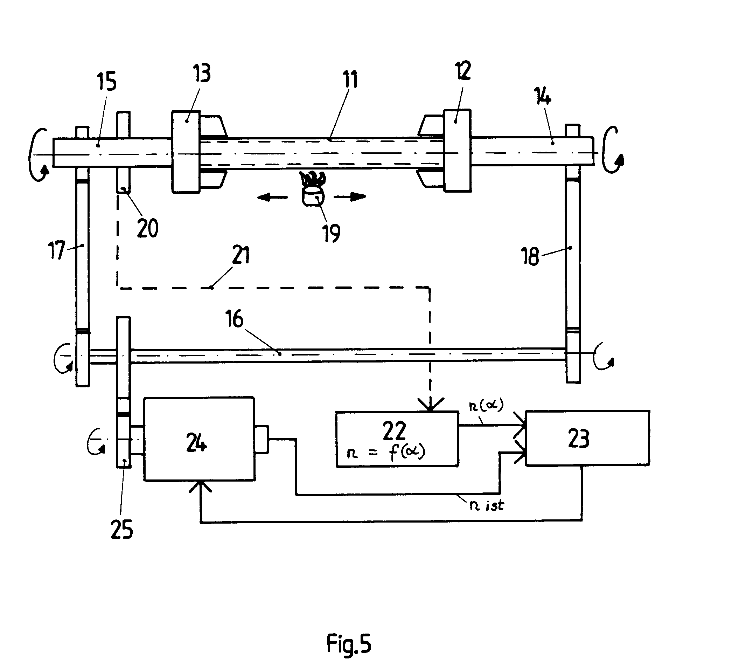

Werden besonders enge Fertigungstoleranzen bei hohen Fertigungsgeschwindigkeiten verlangt, dann wird man zur Durchführung der Erfindung eine Vorrichtung wählen, wie sie in der Figur 5 dargestellt ist. Der zu behandelnde Träger 11, im vorliegenden Beispiel ein Glasrohr 11, ist in den beiden endseitig angeordneten Backenfuttern 12 und 13 eingespannt. An diese Backenfutter schließen sich nach außen die Spindel 14 bzw. 15 an, die zum Antrieb des Glasrohres 11 mit der Spindelantriebswelle 16 beispielsweise über Riementriebe 17 und 18 verbunden sind. Die Wärmebehandlung des Glasrohres 11 zum Zwecke der Innenbeschichtung, des Kollabierens, des Sleevens oder auch des Ätzens erfolgt mittels des schematisch angeordneten Brenners 19, der in Achsrichtung des Rohres 11 an diesem in Pfeilrichtung hin- und herbewegt wird.

Um nun sicherzustellen, daß sich während eines Umlaufes die Temperaturverteilung an der Oberfläche des vom Brenner erfaßten Bereiches des Glasrohres 11 in der gewünschten und für die Formgebung der Faser z. B. notwendigen Weise ändert, ist der Drehwinkelgeber 20 auf der Spindel 15 angeordnet, mit dem hochauflösend und verzögerungsfrei die jeweilige Winkelposition der Spindeln und damit des achsgleich angeordneten Glasrohres gemessen wird. Die gemessene Winkelgrö- ße a wird dann, wie in der Figur 5 verdeutlicht, über die Verbindungsleitung 21 dem Rechner 22 zugeführt, der die Drehzahlsollwertfunktion ermittelt und diesen Wert dem PID-Drehzahlregler 23 mit nachgeschaltetem 4Q-Motortreiber zuführt. Dieser Regler 23 erhält, wie dargestellt, vom massearmen Scheibenläufermotor 24 die Istdrehzahl, die entsprechend dem in 22 berrechneten Sollwert für den jeweiligen Drehwinkelbereich korrigiert und zur entsprechenden Steuerung der Drehzahl des Scheibenläufermotors 24 verwendet wird. Auf diese Weise ist es möglich, ohne Änderung der heute üblichen und für die erfindungsgemäßen Zwecke verwendeten Brenneranordnungen lediglich durch Änderung der Winkeldrehzahl eines umlaufenden Trägers für eine über den Umfang ungleichmäßige, für die Zwecke der Erfindung aber benötigte Temperaturverteilung zu sorgen.

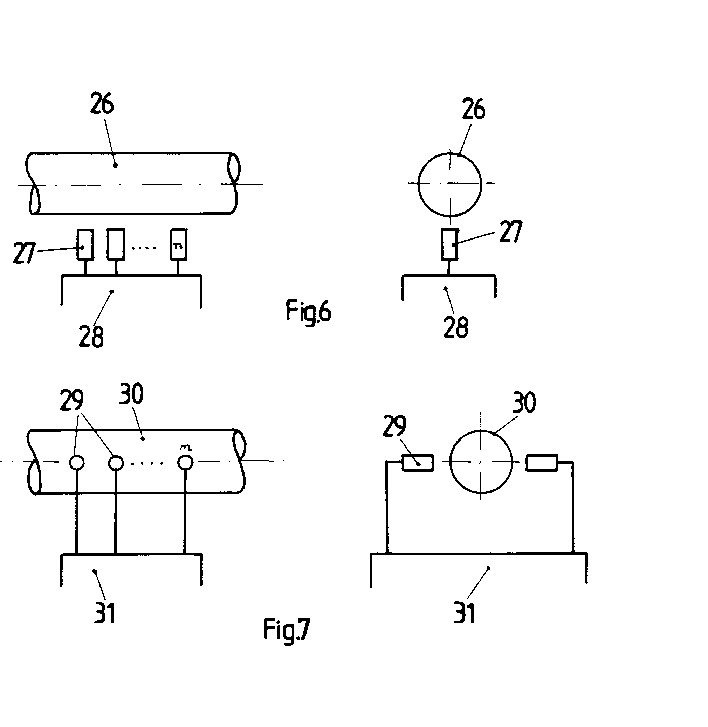

Die Figuren 6 und 7 schließlich zeigen Anordnungen der Brennerköpfe, wie sie für die Zwecke der Erfindung besonders geeignet sind. Unterhalb des Trägers 26, beispielsweise eines innen zu beschichtenden Glasrohres oder eines außen zu beschichtenden Kernsubstrates, sind die Brennerköpfe 27 auf dem Brennertisch 28 angeordnet. Die Brennerköpfe sind hierbei in Reihe hintereinander und unmittelbar senkrecht unter dem Träger 26 vorgesehen. Abweichend hiervon ist es jedoch auch möglich, die Brennerköpfe in einem anderen Winkel zu dem oberhalb rotierenden Träger 26 vorzusehen, wobei sie aber jeweils wieder hintereinander in Reihe angeordnet sind.

Abweichend von der Figur 6 zeigt die Figur 7 eine Anordnung, bei der die Brennerköpfe 29 in zwei gegenüber liegenden Reihen zum Träger, d. h. zum zu beschichtenden Glasrohr 30 angeordnet sind. Der Brennertisch ist hier mit 31 bezeichnet. Die Strahlachsen der Brenner 29 sind um 180 versetzt vorgesehen, sie müssen allerdings nicht, wie dargestellt, parallel zum Brennertisch 31 angeordnet sein, sie können sich hierzu auch in einem geeigneten Winkel befinden.

Wenn auch in den dargestellten Ausführungsbeispielen zur Wärmebehandlung Gasbrenner vorgesehen sind, so ist die Erfindung hierauf jedoch keineswegs beschränkt. So können auch Wärmequellen anderer Art für die Zwecke der Erfindung eingesetzt werden, beispielsweise ein elektrischer Ofen mit unterschiedlicher Wärmeentwicklung in Umfangs- und Längsrichtung.

## Patentansprüche

1. Verfahren zur Herstellung einer Vorform für Glasfaser-Lichtwellenleiter mit einem Kern und einem ein- oder mehrschichtigen Mantel, bei dem Glasmaterialien unter Wärmeeinwirkung auf einem Träger abgeschieden und/oder solche durch Ätzen wieder abgetragen werden, wobei während der Abscheidung und/oder des Ätzens mindestens der Träger oder der Wärmequelle eine Drehbewegung um seine Achse ausführt, dadurch gekennzeichnet, daß während der Drehbewegung des Trägers die Winkelgeschwindigkeit in Abhängigkeit vom jeweiligen Drehwinkel gesteuert wird.

2. Verfahren nach Anspruch 1, dadurch gekennzeichnet, daß die Steuerung längs vorgegebener Winkelbereiche zu unterschiedlichen Drehgeschwindigkeiten des Trägers während einer Umdrehung führt.

3. Verfahren nach Anspruch 1 oder 2, dadurch gekennzeichnet, daß die jeweilige Winkelposition des Trägers gemessen, hieraus die Drehzahlsollwert-Funktion n (a) ermittelt und zur Drehung des Trägers verwendet wird.

4. Vorrichtung zur Durchführung des Verfahrens mit einer Dreheinheit für den Träger nach Anspruch 1 oder einem der folgenden, dadurch gekennzeichnet, daß an der Dreheinheit ein Drehwinkelgeber angeordnet ist, der an einem Rechner zur Ermittlung der Drehzahlsollwert- Funktion angeschlossen ist, und daß dieser Rechner mit der für den jeweiligen Drehwinkelbereich vorgesehenen Solldrehzahl den Antrieb für den Träger beaufschlagt.

5. Vorrichtung nach Anspruch 4, dadurch gekennzeichnet, daß der Antrieb für den Träger ein drehmassearmer Motor ist, der auf eine Spindelantriebswelle für den beiderseitigen Antrieb des Trägers einwirkt.

6. Vorrichtung zur Durchführung des Verfahrens nach Anspruch 1 oder einem der folgenden, dadurch gekennzeichnet, daß auf einer Spindel zur beiderseitigen Lagerung des Trägers eine dem gewünschten Faserquerschnitt der aus der Vorform gezogenen Faser entsprechende Scheibe angeordnet ist, deren von der Kreisform abweichende Querschnittsform über eine Abtastung des Umfanges eine Spannungsänderung an einem Steuerwiderstand oder sonstigen Sensor hervorruft, die unmittelbar oder mittelbar den Antriebsmotor der Dreheinheit beeinflußt.

7. Vorrichtung zur Durchführung des Verfahrens nach Anspruch 4 oder einem der folgenden mit zur Wärmebehandlung dienenden Gasbrennern mit Brennerköpfen, dadurch gekennzeichnet, daß die Brennerköpfe in Bezug auf die Trägerachse die gleiche Winkelposition einnehmen und in Reihe hintereinander angeordnet sind.

8. Vorrichtung zur Durchführung des Verfahrens nach Anspruch 4 oder einem der folgenden mit zur Wärmebehandlung dienenden Gasbrennern mit Brennerköpfen, dadurch gekennzeichnet, daß die Brennerköpfe in Bezug auf die Trägerachse in Reihen einander gegenüber angeordnet sind.

9. Vorrichtung zur Durchführung des Verfahrens nach Anspruch 4, dadurch gekennzeichnet, daß zur Wärmebehandlung ein elektrischer Ofen mit unterschiedlicher Wärmeentwicklung in Umfangs- und Längsrichtung eingesetzt wird.
